# EUROPEAN PATENT APPLICATION

(11) **EP 2 075 990 A1**
(43) Date of publication of application: **01.07.2009**
(21) Application number: 08166232.2
(22) Date of filing: 09.10.2008
(51) Int. Cl.: H04L 29/08

(54) **Network video/audio browsing system and browsing method thereof**

(30) Priority: 28.12.2007 CN 200710307370
(71) Applicant: ASUSTeK Computer Inc., Peitou,Taipei (TW)
(72) Inventor: Chan, Yi-Ting, Taipei (TW); Yeh, Chien-Chih, Taipei (TW)
(74) Representative: Viering, Jentschura & Partner

(57) **Abstract**

A network browsing method is provided for browsing video/audio data shot by an IP camera (22). A local computer (23) is coupled to a LAN (local area network) to detect the IP camera (22). The network browsing method includes the steps of: executing an application program by the local computer (23) to obtain an identification code stored in the IP camera (22); transmitting for registering the identification code to a DDNS (Dynamic Domain Name Server) (21) by the application program; obtaining a personal IP camera address and a personal server address so as to couple to the IP camera (22) and control the IP camera (22) via the personal IP camera address and the personal server address; and coupling to a service server (24) via the personal server address so as to obtain the video/audio data shot by the IP camera (22). The service server (24) captures the video/audio data shot by the IP camera (22) via the Internet (1).

## Description

The invention relates to a system and method for browsing video/audio data, more particularly to a network vide/audio browsing system and method to be set up in an IP camera (also called network camera) for browsing the video/audio data shot by the IP camera.

As the network technology advances, more and more network applied products are invented continually. One most commonly known network applied product is the IP camera, which can display its content (the video/audio data) via the Internet. The IP camera is usually connected to a network via a router, and has an IP (Internet Protocol) address after the connection operation.

When one wishes to watch the screens shot by the IP camera, the following two methods are conducted.
1. The client's apparatus (such as a notebook computer, cellular phone, network-connected electronic device) firstly can access the network (in which the IP camera is registered) with the assistance of IP address of the IP camera, and thus displays the video/audio data shot by the IP camera. Since an IP address of the client's apparatus is generally dynamic, a DDNS (Dynamic Domain Name Server) is required to locate an actual IP address of the IP camera on the network to couple the client's apparatus automatically with the IP camera.
2. The client's apparatus is coupled to a service server via the IP address of the service server and thus displays the video/audio data shot by the IP camera. Since the service server is provided in order to supply video/audio data to the client's apparatus via the Internet, several pieces of IP cameras are coupled to the service server so that the service server can supply video/audio data from different sources. Thus, when the client's apparatus is coupled to the service server, he or she must input a specific account or a specific identification code in order to access the desired IP camera.

However, the aforesaid IP camera has the following problems:
1. During the registering operation of the IP camera (i.e. obtaining the IP address of the IP camera), the user must personally find out the provider (or enterpriser) of the DDNS and the application number in order to verify its personal identity and the hostname. Thus, the user must memorize the application number, the hostname and the account. It is relatively complicated to do these things.
2. Several pieces of IP cameras commonly use the IP address of a single server and in case one wishes to watch the video/audio data shot by a specific IP camera, he or she must additionally input a specific account or coded numbers set for accessing the specific IP camera. It is relatively inconvenience for the user to input the specific account or coded numbers.
3. The IP addresses of the IP camera and the server are not related to each other and therefore it is hard for the user to memorize all the IP addresses.
4. The client's apparatus should be installed with an appropriate image viewing tool or else he or she cannot watch the video/audio data shot by the IP camera or supplied by the service server.

The object of the present invention is to provide a network video/audio browsing system and method, in which several complicated steps, such as registering to DDNS and verifying its identification code, are eliminated. The user only needs to install the application program or provide the hostname to the IP camera so as to personalize the IP camera address of the IP camera.

The other object of the present invention is to obtain a specific personal server address corresponding to each IP camera such that when the client's apparatus is connected to the service server via the personal server address, the client can directly watch the video/audio data shot by the desired IP camera.

A network video/audio browsing method is provided according to the present invention for browsing video/audio data shot by an IP camera. A local computer is coupled to a LAN (local area network) so as to detect the IP camera.

The network video/audio browsing method accordingly includes the steps of: (i) executing an application program by the local computer in order to obtain an identification code stored in the IP camera; (ii) transmitting for registering the identification code to a DDNS (Dynamic Domain Name Server) by the application program; (iii) obtaining a personal IP camera address and a personal server address so as to couple to the IP camera and control the IP camera via the personal IP camera address and the personal server address; and (iv) coupling to a service server via the personal server address so as to obtain the video/audio data shot by the IP camera, wherein the service server captures the video/audio data shot by the IP camera via the Internet.

The network video/audio browsing system of the present invention is used for browsing the video/audio data shot by an IP camera. The browsing system includes a DDNS (Dynamic Domain Name Server), an IP camera stored with an identification code, a service server, a local computer and at least one client's apparatus. Each of the preceding items is connected to the Internet.

The service server is capable of capturing the video/audio data shot by the IP camera via the Internet. The local computer is coupled to the same LAN (Local Area Network) with the IP camera, wherein the local computer is able to execute an application program to obtain the identification code for registering to the DDNS, thereby obtaining a personal IP camera address and a personal server address.

The client's apparatus can be coupled to the IP camera via the personal IP camera address so as to control the IP camera and to the service server via the personal server address, thereby obtaining the video/audio data shot by the IP camera.

Other features and advantages of this invention will become more apparent in the following detailed description of the preferred embodiment of this invention, with reference to the accompanying drawings, in which:

Figure 1 shows a structure illustrating a network video/audio browsing system of the present invention for browsing the video / audio data shot by an IP camera; and

Figure 2 is a block diagram illustrating the steps of the network browsing method of the present invention for browsing the video/audio data shot by the IP camera.

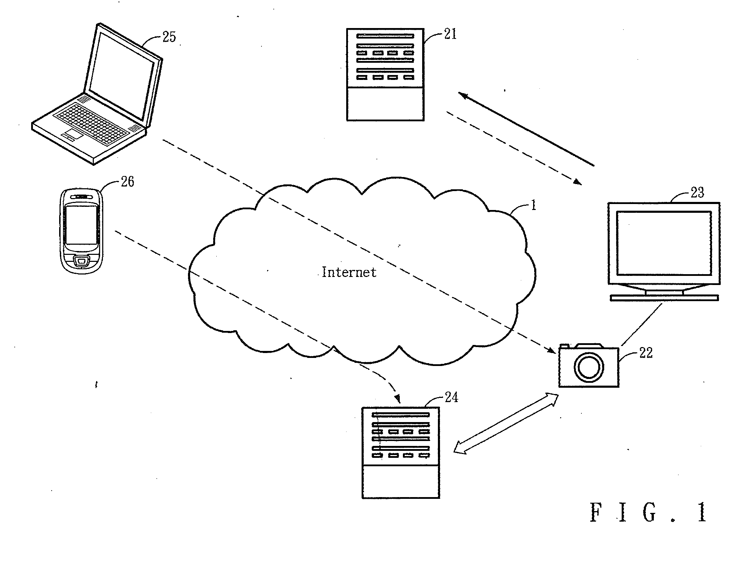

Figure 1 shows a structure illustrating a network browsing system of the present invention for browsing the video/audio data shot by an IP camera coupled to a network. As illustrated, the network browsing system includes a DDNS (Dynamic Domain Name Server) 21, an IP camera 22 stored with an identification code, a local computer 23, a service server 24 and at least one client's apparatus 26, wherein each of the preceding items is connected to the Internet 1.

The DDNS 21 employed in the network browsing system of the present invention includes a support database stored with a plurality of sets of product identification code which are used for verifying an actual identity of an electronic product certified by the manufacturer. In one embodiment, the manufacturers generally provide a specific identification code to each of the products during the mass production prior to sending the electronic products for sale and register all the identification codes in the support database of the DDNS 21. Thus, when the electronic product is coupled to the DDNS 21, the DDNS 21 will register the electronic product quickly only after verifying and confirming the identification code of the electronic product with respect to the stored data in the support database. The user can even use a self-selected hostname if he wishes to during this procession. Therefore, the IP camera 22 in the network browsing system of the present invention is stored in advance with an identification code in addition to its ability to capturing images.

Referring to Figure 1, a local computer 23 is capable of detecting presence of the IP camera 22 in a LAN (Local Area Network). When the user of the local computer 23 installs the application program of the IP camera 22, the identification code of the electronic product is registered via the application program to the DDNS 21, thereby obtaining a personal IP camera address and personal server address.

To be more specific, when the local computer 23 executes the aforesaid application program, the application program will capture the identification code of the IP camera 22 and the user can input its hostname such that the application program transmits the message in a data package to the DDNS 21 for verifying and registering operation, wherein the data package consists of an identification code and a hostname. In case the user does not choose its hostname, the DDNS 21 will automatically provide a hostname.

After verification to the identification code of the electronic product, the DDNS 21 offers two sets of IP addresses to the user of the local computer 23, wherein the user can use a first IP address; namely a personal IP camera address, for coupling to the IP camera 22 in order to control the IP camera 22. The user can use the second IP address, namely personal server address, for coupling the local computer 23 to the service server 24. Each of the personal IP camera address and the personal server address may include the user's self-selected hostname.

In the network browsing system of the present invention, the service server 24 capture the video/audio data shot by the IP camera 22 via the Internet 1. According to one embodiment, the service server 24 includes a database for storing the video/audio data shot by the IP camera 22. In other words, the service server 24 can capture not only the instant video/audio data of the IP camera 22 but also the recorded files of the video/audio data of the IP camera 22.

Moreover, since the service server 24 is coupled to several pieces of the IP cameras, it can supply the video/audio data from different sources. During setting each of the IP cameras, the DDNS 21 provides a personal IP camera address and personal server address to each of the IP cameras. Therefore, several personal server addresses can be coupled with the same service server 24. However, when different personal server addresses are coupled with the service server 24, the service server 24 can supply the video/audio data of the different IP cameras. In other words, in case a specific personal server address is coupled with the service server 24, the service server 24 can only supply the video/audio data of the corresponding IP camera.

In the present invention, the client's apparatus 25, 26 may be a notebook computer, a cellular phone, a PDA, a desktop personal computer or network-connected electronic devices.

As illustrated, when the client's apparatus 25 desires to control the IP camera 22, the apparatus 25 can be coupled to the IP camera 22 via the personal IP camera address on the Internet 1 at the remote end. Under this condition, the client's apparatus 25 can control the shooting angle of the IP camera 22, the IP camera's viewing range, the focal length of the IP camera 22 and the shooting distance relative to the shooting target etc. In addition, the client's apparatus 25 can also display the instant video/audio data being shot.

When the client's apparatus 26 desires to capture/watch the video/audio data shot by the IP camera 22, the apparatus 26 can be coupled to the service server 24 via the personal server address on the Internet 1 at the remote end. The service server 24 will supply the video/audio data shot by the IP camera 22 to the client's apparatus 26. Note that the video/audio data supplied by the service server 24 are shot by the IP camera 22 corresponding to the personal server address. Therefore, after coupling of the client's apparatus 26 with the service server 24, the user needs not input an additional set of account or coded numbers for watching or capturing the desired video/audio data.

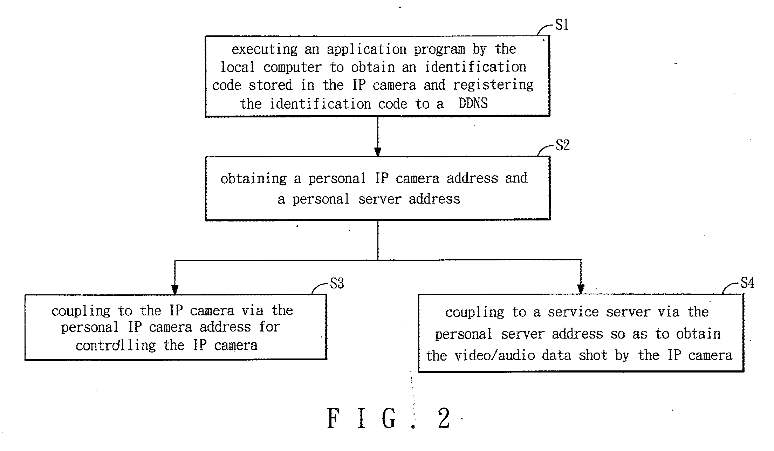

Figure 2 is a block diagram illustrating the steps of the network browsing method of the present invention for browsing the video/audio data shot by the IP camera. The browsing method includes the following steps.

The local computer 23 executes the application program of the IP camera 22 in order to obtain an identification code stored in the IP camera 22 and registers the identification code to the DDNS 21 (S1). During this step, a hostname defined by the user is also transmitted to the DDNS by the application program. The user can input a self-selected hostname in order to enhance or facilitate memorizing the hostname.

Note that the local computer 23 and the IP camera 22 are located within the same LAN (Local Area Network) such that the local computer 23 is capable of detecting the IP camera 22.

After the DDNS 21 verifies and confirms the identification code of the IP camera 22, the DDNS 21 provides two sets of personal IP addresses to the local computer 23 such that the user thereof obtains a personal IP camera address and a personal server address (S2).

The client's apparatus 25 is coupled to the IP camera 22 via the personal IP camera address so as to control the IP camera 22 (S3) or the client's apparatus 26 is coupled to the service server 24 via the personal server address so as to capture the video/audio data shot by the IP camera 22 (S4), wherein the service server 24 capture the video/audio data shot by the IP camera 22 via the Internet 1.

Moreover, when the client's apparatus 26 is coupled to the service server 24 via the personal server address, the service server 24 will first of all detect an operation system of the client's apparatus 26, and later provides a display tool suitable for the operation system of the client's apparatus 26. After the client's apparatus 26 had installed the display tool, the service server 24 transmits the video/audio data shot by the IP camera 22 to the client's apparatus 26 in video stream via an appropriate format.

In the event, the client's apparatus 26 does not install the display tool supplied by the service server 24 or the client's apparatus 26 is in lack of the suitable display tool, the service server 24 supplies the video/audio data in a manner that the client's apparatus needs the web browsing tool only for browsing the video/audio data shot by the IP camera 22.

In short, the following advantages are provided by the network browsing system and method of the present invention.
1. The setting process of the IP camera is simplified. When using the network browsing system or method of the present invention, the complicated processes such as registering the identification code to the DDNS and verifying the identification code by the DDNS are eliminated. The user only needs to install the application program of the IP camera or input the hostname such that the identification code of the IP camera will be transmitted to the DDNS in data package. Once verified and confirmed by the DDNS, a personal IP camera address is obtained.
2. When the network browsing system of the present invention is installed, each of the IP cameras has a specific personal server address. When the client's apparatus is coupled with the service server via the personal server address, the client's apparatus can directly browse the video/audio data shot by the desired IP camera. Thus, the user needs not input an additional account or coded numbers for accessing the desired IP camera, thereby offering convenience to the user of the client's apparatus.
3. In two sets of the IP addresses provided by the method of the present invention, the personal IP camera address is available to the user who has the authorization while the personal server address is available to any persons recognized by the administrator, thereby forming a first group for remotely controlling the IP camera and a second group who can only browse the video/audio data shot by the IP camera.

## Claims

1. A network video/audio browsing method for browsing video/audio data shot by an IP camera (22), a local computer (23) being coupled to a LAN (local area network) so as to detect the IP camera (22), the network video/audio browsing method **characterized in that** the following steps of:
executing an application program by the local computer 23 in order to obtain an identification code stored in the IP camera 22;
transmitting for registering the identification code to a DDNS 21 (Dynamic Domain Name Server) by the application program;
obtaining a personal IP camera address and a personal server address so as to couple to the IP camera (22) and control the IP camera (22) via the personal IP camera address and the personal server address; and
coupling to a service server 24 via the personal server address so as to obtain the video/audio data shot by the IP camera (22), wherein the service server (24) captures the video/audio data shot by the IP camera (22) via the Internet (1).

2. The network video/audio browsing method according to claim 1, **characterized in that** in the step of transmitting for registering the identification code to the DDNS (21) by the application program, a hostname defined by the user is also transmitted to the DDNS 21 by the application program.

3. The network video/audio browsing method according to claim 2, **characterized in that** each of the personal IP camera address and the personal server address includes the hostname defined by the user.

4. The network video/audio browsing method according to claim 1, **characterized in that** the step of coupling to the service server (24) via the personal server address so as to obtain the video/audio data shot by the IP camera (22), further includes the steps of:
detecting an operation system of a client's apparatus (26), which is coupled with the service server (24);
providing a video/audio display tool suitable for the operation system of the client's apparatus (26); and
transmitting the video/audio data shot by the IP camera (22) to the client's apparatus (26) via an appropriate format.

5. A network video/audio browsing system **characterized by**:
a DDNS (Dynamic Domain Name Server) (21);
an IP camera (22) stored with an identification code ;
a service server (24) for capturing video/audio data shot by the IP camera (22) via the Internet (1) ;
a local computer (23) coupled to the same LAN with the IP camera (22), wherein the local computer (23) executes an application program to obtain the identification code for registering to the DDNS (21), thereby obtaining a personal IP camera address and a personal server address; and
a client's apparatus (26) for coupling to and controlling the IP camera (22) via the personal IP camera address and for coupling to the service server (24) via the personal server address, thereby obtaining the video/audio data shot by the IP camera (22).

6. The network video/audio browsing system according to claim 5, **characterized in that** the service server (24) further includes a database for storing the video/audio data shot by the IP camera (22).

7. The network video/audio browsing system according to claim 5, **characterized in that** the client's apparatus (26) is a notebook computer (25), a cellular phone, a PDA or a desktop personal computer 23.
